# EUROPEAN PATENT SPECIFICATION

(11) **EP 4 064 153 B1**
(45) Date of publication and mention of the grant of the patent: **04.09.2024**
(21) Application number: 20907591.0
(22) Date of filing: 25.11.2020
(51) Int. Cl.: G06Q 10/0639, G06F 3/01, G06V 40/18

(54) **BUSINESS MANAGEMENT SYSTEM, BUSINESS MANAGEMENT METHOD, AND BUSINESS MANAGEMENT PROGRAM**
SYSTEM, VERFAHREN UND PROGRAMM ZUR GESCHÄFTSVERWALTUNG
SYSTÈME DE GESTION D'ENTREPRISE, PROCÉDÉ DE GESTION D'ENTREPRISE ET PROGRAMME DE GESTION D'ENTREPRISE

(30) Priority: 25.12.2019 JP 2019234345
(43) Date of publication of application: 28.09.2022
(73) Proprietor: NEC Platforms, Ltd., Kanagawa 213-8511 (JP)
(72) Inventor: IIZUKA Yusuke, Kawasaki-shi, Kanagawa 213-8511 (JP)
(74) Representative: Vossius & Partner Patentanwälte Rechtsanwälte mbB
(86) International application number: PCT/JP2020/043793
(87) International publication number: WO 2021/131465

(56) References cited:
- EP-A2- 0 816 985
- WO-A1-2017/152592
- JP-A- 2012 063 885
- JP-A- 2012 063 885
- JP-A- 2015 079 498
- US-A1- 2015 097 938

## Description

### Technical Field

The present invention relates to a business management system, a business management method, and a business management program, and more particularly, to a business management system, a business management method, and a business management program for acquiring an actual state of business of a worker who uses an application program(s) (hereinafter, simply referred to as an "application(s)").

### Background Art

Conventionally, various techniques have been proposed for monitoring a work status of a worker performing telework. For example, a remote work status monitoring system disclosed in Patent Literature 1 is intended to monitor a work status of a worker, based on an operating state of the worker's personal computer (PC). US 2015/097938 A1 discloses a method and an apparatus for reading behavior. JP 2012 063885 A discloses an apparatus for analyzing operation histories and biological information histories of an operator of a computer. EP 0 816 985 A2 discloses an apparatus, a method, systems and computer programs for assisting a user of display device to more quickly recover from a distraction causing the user to look away from the display device. WO 2017/152592 A1 discloses a mobile terminal application operation method and a mobile terminal for performing sight identification on a plurality of user pupil images to obtain a user sight comprising a gazing range and and sending the gazing range of the user sight to the mobile terminal application.

### Citation List

### Patent Literature

[Patent Literature 1] Japanese Unexamined Patent Application Publication No. 2000-48078

### Summary of Invention

### Technical Problem

However, it is difficult to acquire a usage time of an application to be used by a worker in a business since the remote work status monitoring system disclosed in Patent Literature 1 only monitors a non-job process, such as a game, or an operating state of a screen saver as an operating state of a PC, and therefore, there is a problem that it is difficult to acquire an actual state of business of the worker in detail.

In view of the above-mentioned problem, an object of the present invention is to provide a business management system, a business management method, and a business management program that are capable of acquiring an actual state of business of a worker using an application.

### Solution to Problem

The invention is specified by the independent claims. Preferred embodiments are defined in the dependent claims. In the following description, although numerous features may be designated as optional, it is nevertheless acknowledged that all features comprised in the independent claims are not to be read as optional.

A business management system according to one example embodiment of the present invention includes:
an analyzing unit that analyzes an image and detects an iris of a user;
a position determining unit that determines whether a position of the iris of the user in the image is within a correspondent screen region corresponding to a display screen, on which an application screen is displayed, when the iris of the user is detected;
a viewpoint coordinate calculating unit that calculates a viewpoint coordinate indicating a viewpoint of the user on the display screen, based on the position of the iris of the user when the position of the iris of the user is within the correspondent screen region;
an application identifying unit that uses coordinate information of the application screen being displayed on the display screen to identify an application providing an application screen viewed by the user;
an application determining unit that determines whether the identified application is a predetermined application to be used in a business;
and a time calculating unit that calculates a usage time of an application determined to be the predetermined application when the identified application is determined to be the predetermined application.

### Advantageous Effects of Invention

According to the present invention, it is possible to provide a business management system, a business management method, and a business management program that are capable of acquiring an actual state of business of a worker who uses an application.

### Brief Description of Drawings

Fig. 1 is a schematic diagram illustrating an example embodiment of a business management system according to an example embodiment of the present invention.
Fig. 2 is a block diagram illustrating a detailed configuration of a user PC according to an example embodiment of the present invention.
Fig. 3 is a block diagram illustrating a detailed configuration of a management server according to an example embodiment of the present invention.
Fig. 4 is a block diagram illustrating main components of a user PC and a management server according to an example embodiment of the present invention.
Fig. 5 is a diagram illustrating an example of a data storage table.
Fig. 6 is a flowchart illustrating an example of processing to be executed by the user PC according to an example embodiment of the present invention.
Fig. 7 is a flowchart illustrating an example of processing to be executed by the management server according to an example embodiment of the present invention.
Fig. 8 is a flowchart illustrating an example of processing to be executed by the management server according to an example embodiment of the present invention.
Fig. 9 is a diagram illustrating an example of an addition target time to which a predetermined time is added.
Fig. 10 is a diagram illustrating an example of an image.
Fig. 11 is a diagram for explaining a calculation method of viewpoint coordinates.
Fig. 12 is a diagram illustrating an example of an image generated by a management server according to an example embodiment of the present invention.

### Description of Embodiments

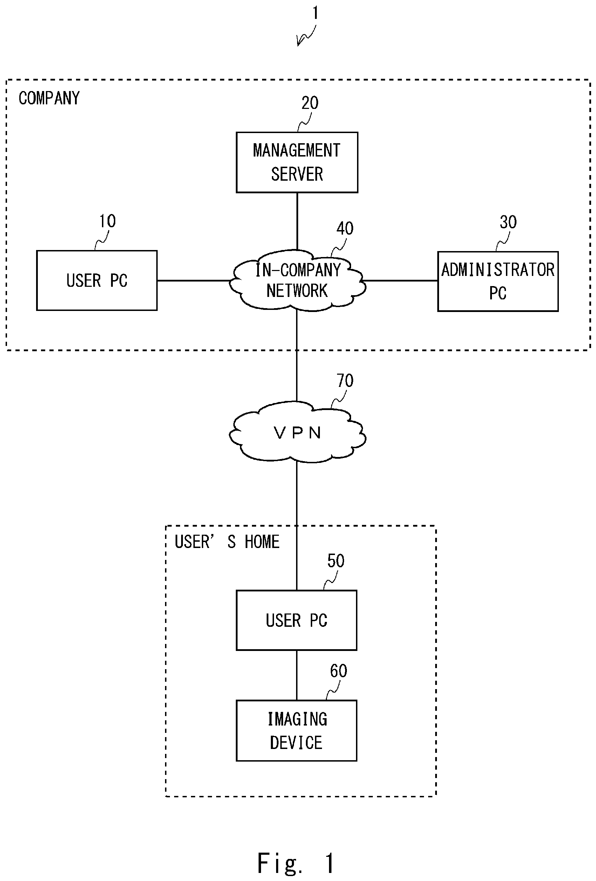

Hereinafter, an example embodiment of the present invention will be described with reference to the drawings. Fig. 1 is a schematic diagram illustrating an example embodiment of a business management system 1 according to the present invention. The business management system 1 includes a user PC 10, a management server 20, an administrator PC 30, a user PC 50, and an imaging device 60.

The user PC 10, the management server 20 and the administrator PC 30 can be installed in a place of work of a worker to be managed, for example, in a company or the like. The user PC 10, the management server 20, and the administrator PC 30 can communicate data with each other via an in-company network 40 such as a Local Area Network (LAN).

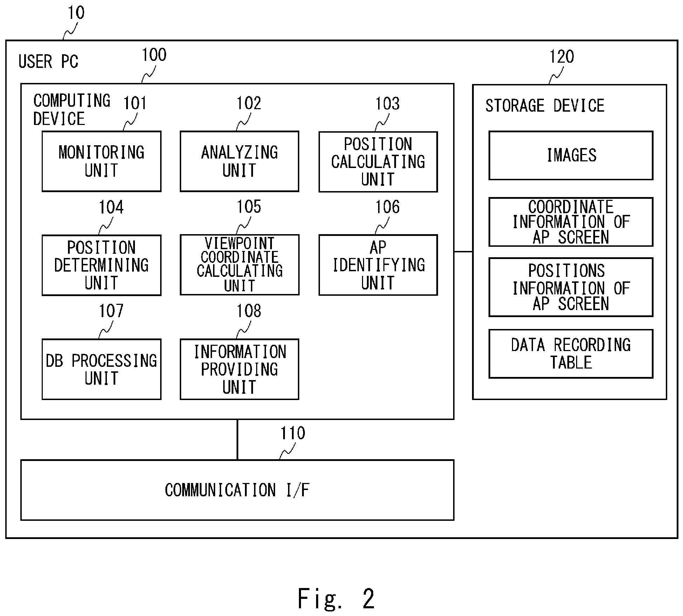

The user PC 10 is an information processing device implementing a remote desktop function that can be operated remotely. And a worker to be managed can use the user PC 50 to use an application or data of the user PC 10. Details of functions of the user PC 10 will be described later with reference to Fig. 2.

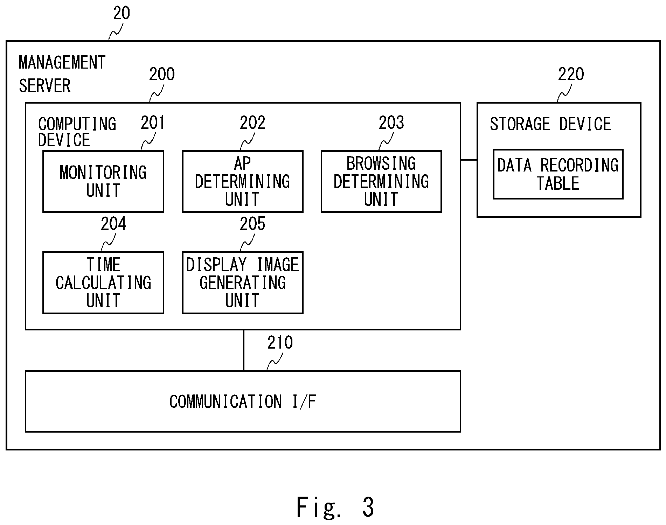

The management server 20 is an information processing device that uses information provided by the user PC 10 to calculate a usage time for each application, a non-business work time, and a time when a worker to be managed is leaving his/her seat. Details of functions of the management server 20 will be described later with reference to Fig. 3.

The administrator PC 30 is an information processing device to be used by an administrator of a worker to be managed. The administrator PC 30 requests the management server 20 for an image indicating the usage time for each application, the non-business work time, and the time when the worker to be managed is leaving his/her seat, and then displays the image acquired from the management server 20 on a display device of the administrator PC 30.

The user PC 50 and the imaging device 60 are installed in a work space such as a home of a worker to be managed. The user PC 50 has a remote desktop function capable of remotely operating the user PC 10. The user PC 50 can access the user PC 10 in a company via a Virtual Private Network (VPN) 70 to use applications and data of the user PC 10.

The imaging device 60 is communicably connected to the user PC 50. The imaging device 60 is installed at a position where a face of a user of the user PC 50, in particular, eyes of the user can be imaged. The imaging device 60 executes imaging process at a predetermined time interval. The predetermined time interval may generally be a time (200 milliseconds, etc.) that a person is looking at one place for when reading a sentence. When the imaging device 60 executes the imaging process to generate an image, it transmits the image to the user PC 50. Note that an imaging device integrated with the user PC 50 may be used instead of the imaging device 60.

The user PC 50 transmits, to the user PC 10 in the company via the VPN 70 and the in-company network 40, the image provided by the imaging device 60, coordinate information of a screen(s) that an application(s) used by a user who is a worker to be managed provides (hereinafter referred to as an "application screen"), and information indicating positions of application screens in front-back direction. The coordinate information of the application screen includes information indicating coordinates of the application screen displayed on a display device of the user PC 50, identification information of the application providing the application screen, and date and time information when the application screen is displayed. The information indicating the positions of application screens in front-back direction includes information indicating the positions of application screens in front-back direction displayed in a virtually overlapping manner, identification information of the application providing the application screen, and date and time information when the application screen is displayed. The user PC 50 can transmit these pieces of information to the user PC 10 at the predetermined time interval described above.

Fig. 2 is a block diagram illustrating a detailed configuration of the user PC 10 according to an example embodiment of the present invention. The user PC 10 includes a computing device 100, a communication interface (I/F) 110, and a storage device 120. The computing device 100 is a computing device such as a central processing unit (CPU) or a micro processing unit (MPU). The computing device 100 executes a business management program according to an example embodiment of the present invention, thereby executing a business management method according to an example embodiment of the present invention. The program to be executed by the computing device 100 includes a monitoring unit 101, an analyzing unit 102, a position calculating unit 103, a position determining unit 104, a viewpoint coordinate calculating unit 105, an application (AP) identifying unit 106, a database (DB) processing unit 107, and an information providing unit 108. These program modules can be implemented as functions of a Unified Communications (UC) application.

The monitoring unit 101 is a program module that determines whether an image, coordinate information of an application screen, and information indicating positions of application screens in front-back direction are received from the user PC 50. Upon receiving these pieces of information, the monitoring unit 101 stores them in the storage device 120.

The analyzing unit 102 is a program module that analyzes an image stored in the storage device 120 to detect an iris of a user. The analyzing unit 102 acquires an image from the storage device 120 to determine whether the iris of the user is included in the image.

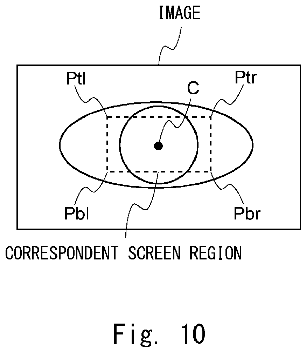

The position calculating unit 103 is a program module that calculates a position of the iris of the user in the image. As illustrated in Fig. 10, the position calculating unit 103 can calculate a center position C of the iris of the user, i.e., the center position of a pupil.

The position determining unit 104 is a program module that determines whether the center position C of the iris of the user is present in a region corresponding to a display screen of the display device of the user PC 50 (hereinafter, referred to as "correspondent screen region"). As illustrated in Fig. 10, an upper left end Ptl, a lower left end Pbl, an upper right end Ptr, and a lower right end Pbr of the correspondent screen region correspond to an upper right end, a lower right end, an upper left end, and a lower left end of the display screen of the display device of the user PC 50, respectively.

The upper left end Ptl of the correspondent screen region is equivalent to the center position C of the iris when the user is looking at the upper right end of the display screen of the display device of the user PC 50. The lower left end Pbl of the correspondent screen region is equivalent to the center position C of the iris when the user is looking at the lower right end of the display screen. The upper right end Ptr of the correspondent screen region is equivalent to the center position C of the iris when the user is looking at the upper left end of the display screen. The lower right end Pbr of the correspondent screen region is equivalent to the center position C of the iris when the user is looking at the lower left end of the display screen. Each of the ends Ptl, Pbl, Ptr, and Pbr of the correspondent screen region can be determined by individually lighting each of the ends of the display screen of the display device of the user PC 50 and using each images when the user is looking at each of the ends of the display screen.

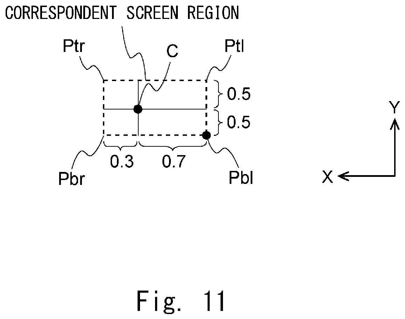

The viewpoint coordinate calculating unit 105 is a program module that calculates viewpoint coordinates indicating a viewpoint of the user on the display screen of the display device of the user PC 50, based on the center position C of the iris of the user in the correspondent screen region. Specifically, as illustrated in Fig. 11, when the lower left end of the display screen of the display device of the user PC 50 is set as an origin, the viewpoint coordinate calculating unit 105 calculates distances in X and Y directions from the lower right end Pbr of the correspondent screen region corresponding to the origin to the center position C. For example, when lengths of the correspondent screen region in the X direction and in the Y direction are each 1, the distances in the X direction and the Y direction of the center position C illustrated in Fig. 11 are 0.7 and 0.5, respectively. When a resolution of the display screen of the display device of the user PC 50 is 1920×1080, the viewpoint coordinates of the user are (X, Y)=(1344(=1920×0.7), 540(=1080×0.5)).

The AP identifying unit 106 is a program module that uses coordinate information of an application screen displayed on the display screen of the user PC 50 and the viewpoint coordinates of the user to identify an application providing an application screen viewed by the user. The AP identifying unit 106 acquires the coordinate information of the application screen from the storage device 120 to determine whether the viewpoint coordinates of the user are included in a region defined by the coordinate information, i.e., in the application screen. When the viewpoint coordinates of the user are included in the application screen, the AP identifying unit 106 identifies the application providing the application screen.

When the application screen is displayed in a virtually overlapping manner, the AP identifying unit 106 acquires information indicating positions of application screens in front-back direction, in addition to the coordinate information of application screen from the storage device 120. When the viewpoint coordinates of the user are included in a region in which the application screens are displayed in a virtually overlapping manner, the AP identifying unit 106 can identify an application that provides the frontmost application screen, based on the information indicating positions of application screens in front-back direction.

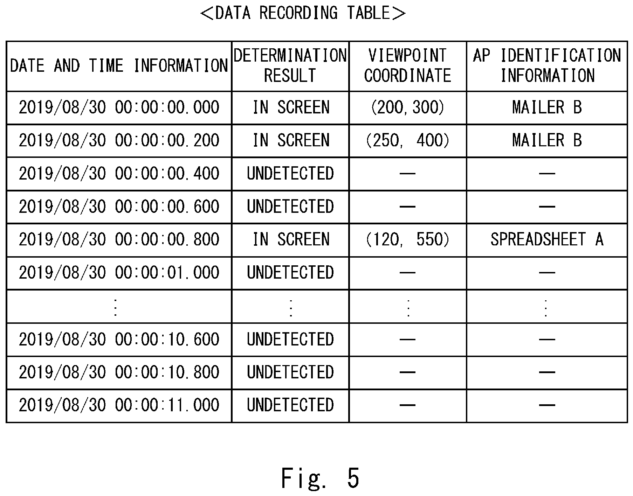

The DB processing unit 107 is a program module that registers information, in response to a request from another program module, in a data storage table generated in the storage device 120. As illustrated in Fig. 5, in the data storage table, date and time information indicating generation date and time of images, a determination result regarding the iris and the viewpoint of the user, the viewpoint coordinates, and the identification information of the application are registered.

The determination result regarding the iris and the viewpoint of the user includes a determination result that the center position C of the iris of the user is within the correspondent screen region, a determination result that the center position C of the iris of the user is outside the correspondent screen region, and a determination result that the iris of the user has not been detected. The determination result that the center position C of the iris of the user is within the correspondent screen region means that the user is viewing the display screen of the display device of the user PC 50. The determination result that the center position C of the iris of the user is outside the correspondent screen region means that the user is viewing an area other than the display screen of the display device of the user PC 50. The identification information of application is identification information of the application providing the application screen viewed by the user.

When the center position C of the iris of the user is within the correspondent screen region, the determination result indicating so, the viewpoint coordinates, and the identification information of the application are registered in association with the date and time information. When the center position C of the iris of the user is outside the correspondent screen region, the determination result indicating so is registered in association with the date and time information. When the iris of the user is not detected, the determination result indicating so is registered in association with the date and time information.

The information providing unit 108 is a program module that provides information recorded in the data storage table to the management server 20. The information providing unit 108 can provide the information recorded in the data storage table to the management server 20 at an arbitrary timing, such as at the end of the user's business.

The communication I/F 110 is a device that transmits and receives various data between the user PC 10 and the user PC 50 or the management server 20 via the in-company network 40 and the VPN 70. The storage device 120 is a storage device in which various types of information such as a program according to an example embodiment of the present invention, an image provided by the user PC 50, coordinate information of application screens, information indicating the positions of application screens in front-back direction, and a data recording table are stored.

Fig. 3 is a block diagram illustrating a detailed configuration of the management server 20 according to an example embodiment of the present invention. The management server 20 includes a computing device 200, a communication interface (I/F) 210, and a storage device 220.

The computing device 200 is a computing device such as a CPU or an MPU. The computing device 200 executes a program according to an example embodiment of the present invention, thereby executing a method according to an example embodiment of the present invention. The program executed by the computing device 200 includes a monitoring unit 201, an application (AP) determining unit 202, a browsing determining unit 203, a time calculating unit 204, and a display image generating unit 205.

The monitoring unit 201 is a program module that determines whether information transmitted by the user PC 10 has been received. When the monitoring unit 201 receives the information, i.e. information recorded in the data storage table of the user PC 10, from the user PC 10, the monitoring unit 201 registers information in a data recording table of the storage device 220.

The AP determining unit 202 is a program module that determines whether an application(s) in which identification information is registered in the data recording table of the storage device 220 is a predetermined application used by a user of the user PC 50 for business. The predetermined application can be determined in advance by a person or the like who manages the business of the user. The AP determining unit 202 determines whether the identification information of the application registered in the data recording table of the storage device 220 matches identification information of the predetermined application, thereby enabling to determine whether the application, the identification information of which is registered in the data recording table, is the predetermined application.

The browsing determining unit 203 is a program module that determines whether the user of the user PC 50 has viewed the application screen in a past specific period based on a generation date and time of the image. The past specific period can be, for example, a period 10 seconds back from a time indicated by date and time information that is the generation date and time of the image. The browsing determining unit 203 refers to the data recording table of the storage device 220 to determine whether the identification information of the application is associated with the date and time information equivalent to the past specific period, thereby enabling to determine whether the user of the user PC 50 has viewed the application screen in the specific period.

The time calculating unit 204 is a program module that calculates a usage time of the application by the user of the user PC 50, a non-business work time of the user, and a time during leaving a seat of the user. The time calculating unit 204 adds a predetermined time (e.g., 200 milliseconds) based on an execution cycle time of imaging process of the imaging device 60, thereby enabling to calculate the usage time of the application, the non-business work time, and the time during leaving the seat.

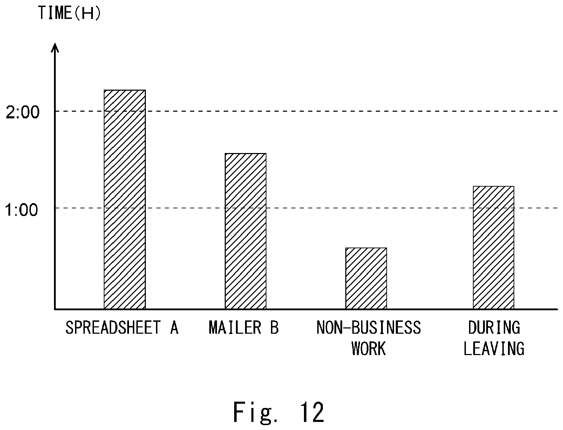

The display image generating unit 205 is a program module that generates an image displaying at least one of the usage time for each application determined to be a predetermined application and a usage rate for each the application per unit time (e.g. working hours per day etc.), the non-business work time, and the time during leaving the seat. The usage rate of the application can be calculated based on the usage time of the application. The display image generating unit 205 generates the image in response to a request from the administrator PC 30 to provide the image to the administrator PC 30. An image as illustrated in Fig. 12 is displayed on the display device of the administrator PC 30. The image illustrated in Fig. 12 displays the usage time for each application, the non-business work time, and the time during leaving the seat.

The communication I/F 210 is a device that transmits and receives various data between the management server 20 and the user PC 10 or the administrator PC 30 via the in-company network 40. The storage device 220 is a storage device that stores various types of information such as a program according to an example embodiment of the present invention and a data recording table.

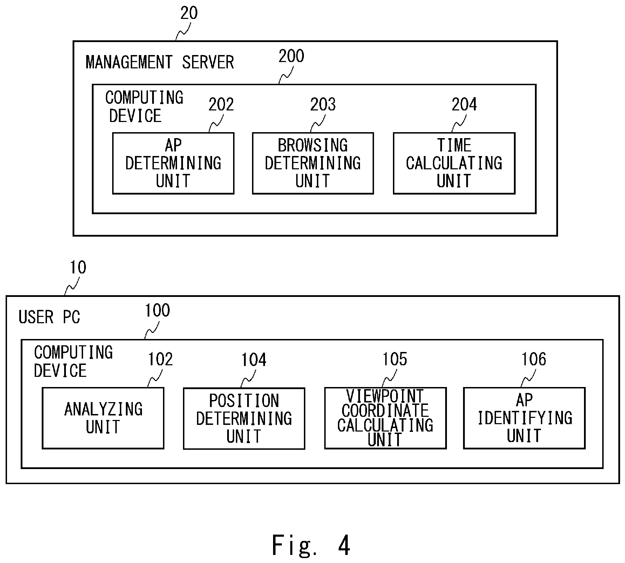

Fig. 4 is a block diagram illustrating main components included in the user PC 10 and the management server 20 according to an example embodiment of the present invention. The user PC 10 includes an analyzing unit 102, a position determining unit 104, a viewpoint coordinate calculating unit 105, and an AP identifying unit 106. The management server 20 includes an AP determining unit 202, a browsing determining unit 203, and a time calculating unit 204.

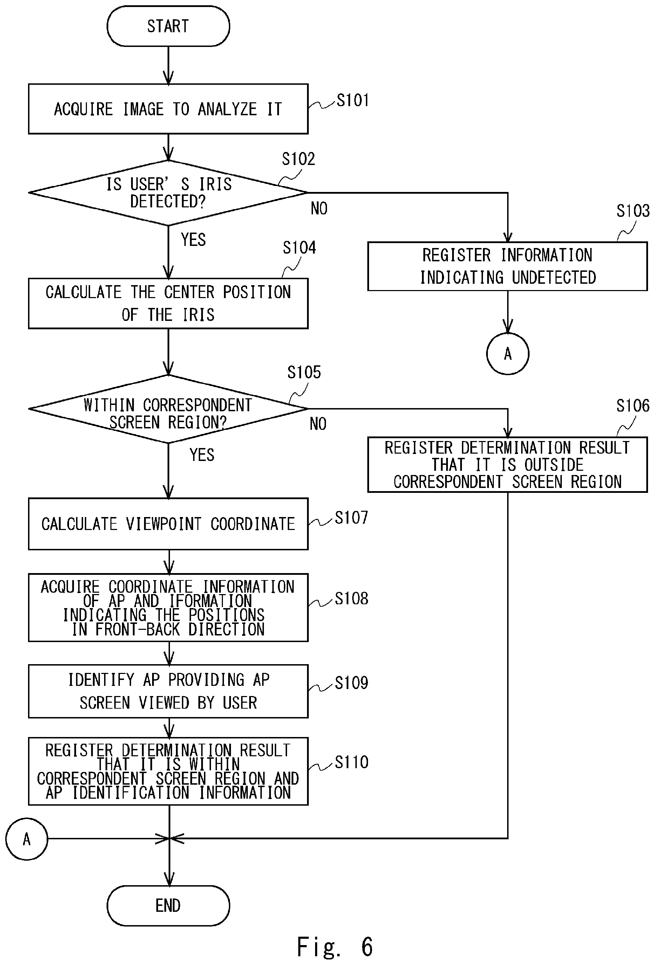

Fig. 6 is a flowchart illustrating an example of processing to be executed by the user PC 10 according to an example embodiment of the present invention. The user PC 10 executes the processing of Fig. 6 for all the images stored in the storage device 120. In step S101, the analyzing unit 102 of the user PC 10 acquires an image provided by the user PC 50 from the storage device 120 to analyze the image. In step S102, the analyzing unit 102 determines whether the iris of the user has been detected. When the iris of the user is not detected (NO), in step S103 the analyzing unit 102 uses the DB processing unit 107 to register the determination result indicating that the iris has not been detected in the data recording table, and the processing of Fig. 6 is ended.

On the other hand, when the iris of the user has been detected (YES), the processing is branched to step S104. In step S104, the position calculating unit 103 calculates the center position C of the iris of the user in the image. In step S105, the position determining unit 104 determines whether the center position C of the iris is within the correspondent screen region. When the center position C of the iris is outside the correspondent screen region (NO), in step S106 the position determining unit 104 uses the DB processing unit 107 to register the determination result that the center position C of the iris is outside the correspondent screen region in the data recording table, and the processing of Fig. 6 is ended.

On the other hand, when the center position C of the iris is within the correspondent screen region (YES), in step S107 the viewpoint coordinate calculating unit 105 calculates viewpoint coordinates of the user on the display screen of the display device of the user PC 50 based on the center position C of the iris of the user in the correspondent screen region. In step S108, the AP identifying unit 106 acquires, from the storage device 120, coordinate information of application screens displayed on the display device of the user PC 50 and information indicating the positions of application screens in front-back direction, which are associated to the image acquired in step S101. The AP identifying unit 106 can identify the coordinate information of the application screens associated to the image and the information indicating the positions of the application screens in front-back direction based on the generation date and time of the image and the date and time information on/at which the application screen is displayed.

In step S109, the AP identifying unit 106 identifies an application that provides the application screen viewed by the user based on the viewpoint coordinates of the user, the coordinate information of the application screens, and the information indicating the positions of application screens in front-back direction. In step S 110, the AP identifying unit 106 uses the DB processing unit 107 to register the determination result that the center position C of the iris is within the correspondent screen region and the identification information of the application viewed by the user in the data recording table, and the processing of Fig. 6 is ended.

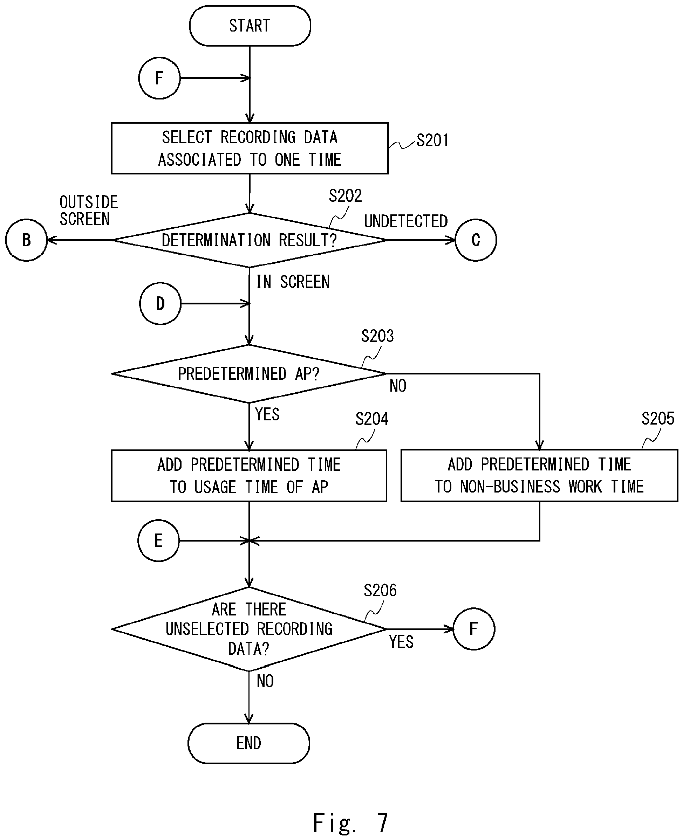

Fig. 7 is a flowchart illustrating an example of processing to be executed by the management server 20 according to an example embodiment of the present invention. In step S201, the AP determining unit 202 selects recording data associated to one time from the recording data stored in the storage device 220. In step S202, the AP determining unit 202 branches the processing based on the determination result of the selected recording data. More specifically, when the determination result indicates that the center position C of the iris of the user is within the correspondent screen region, the processing is branched to step S203. When the determination result indicates that the center position C of the iris of the user is outside the correspondent screen region, the processing is branched to step S207. When the determination result indicates that the iris of the user has not been detected, the processing is branched to step S209.

In step S203, the AP determining unit 202 determines whether the application indicated by the AP identification information of the selected recording data is a predetermined application. When the application indicated by the AP identification information is a predetermined application (YES), the time calculating unit 204 adds a predetermined time to the usage time of the application in step S204. On the other hand, when the application indicated by the AP identification information is not the predetermined application (NO), the time calculating unit 204 adds the predetermined time to the non-business work time in step S205.

In step S206, the AP determining unit 202 determines whether there are any recording data that have not yet been selected. When there are any recording data that have not been selected yet (YES), the processing returns to step S201, and the above-described processing is executed for the recording data associated to the next one time. On the other hand, when there is no recording data that have not been selected yet (NO), the processing of Fig. 7 is ended.

When the determination result indicates that the center position C of the iris of the user is outside the correspondent screen region in step S202, the processing of step S207 is executed. In step S207, the browsing determining unit 203 refers to the data recording table of the storage device 220, and determines whether the identification information of the application is associated with the date and time information indicating the date and time equivalent to the past specific period. The past specific period is a period based on the date and time indicated by the date and time information of the recording data being selected in step S201. When the identification information of the application is associated with at least one of the date and time information of the specific period (YES), the processing is branched to step S203.

In this case, the AP determining unit 202 determines whether the application is a predetermined application. When the application is a predetermined application, the time calculating unit 204 adds a predetermined time to the usage time of the application. More specifically, the time calculating unit 204 adds the period in which the center position C of the iris of the user is outside the correspondent screen region to the usage time of the application determined to be the predetermined application.

On the other hand, when the identification information of the application is not associated with any of the date and time information of the specific period (NO), the processing is branched to step S208. In step S208, the time calculating unit 204 adds a predetermined time to the non-business work time, and the processing proceeds to step S206.

When the determination result indicates that the iris of the user has not been detected in step S202, processing of step S209 is executed. In step S209, similarly to step S207, the browsing determining unit 203 refers to the data recording table of the storage device 220, and determines whether the identification information of the application is associated with the date and time information indicating the date and time equivalent to the past specific period. When the identification information of the application is associated with at least one of the date and time information of the specific period (YES), the processing is branched to step S203.

In this case, the AP determining unit 202 determines whether the application is a predetermined application. When the application is a predetermined application, the time calculating unit 204 adds a predetermined time to the usage time of the application. More specifically, the time calculating unit 204 adds a period during which the iris of the user has not been detected to the usage time of the application determined to be the predetermined application.

On the other hand, when the identification information of the application is not associated with any of the date and time information of the specific period (NO), the processing is branched to step S210. In step S210, the time calculating unit 204 adds a predetermined time to the time during leaving the seat, and the processing proceeds to step S206.

In the example embodiment described above, the analyzing unit 102 of the user PC 10 analyzes the image generated by the imaging device 60 to determine whether the iris of the user has been detected. When the iris of the user has been detected, the position determining unit 104 determines whether the position of the iris of the user in the image is within the correspondent screen region to register the determination result in the data recording table. When the position of the iris of the user is within the correspondent screen region, the viewpoint coordinate calculating unit 105 calculates viewpoint coordinates based on the position of the iris within the correspondent screen region to register the viewpoint coordinates in the data recording table. Next, the AP identifying unit 106 uses the coordinate information and the viewpoint coordinates of the application screen displayed on the display screen to identify an application that provides the application screen viewed by the user to register the identification information of the application in the data recording table. Then, the information providing unit 108 transmits the information registered in the data recording table to the management server 20.

When the management server 20 receives the information from the user PC 10, the AP determining unit 202 determines whether the application indicated by the identification information included in the information is a predetermined application. When it is determined that the application is a predetermined application, the time calculating unit 204 calculates the usage time of the application determined to be a predetermined application. Thereby, the usage time of the application used in a business is calculated and the administrator can acquire the actual state of business of the worker who uses the application used in the business.

In the example embodiment described above, when the iris of the user has not been detected in the image, the browsing determining unit 203 determines whether the user has viewed the screen of the application in the past specific period with reference to the generation date and time of the image. When it is determined that the user has viewed the screen of the application in the past specific period, the AP determining unit 202 determines whether the application is a predetermined application. When it is determined that the application is a predetermined application, the time calculating unit 204 adds the period during which the iris of the user has not been detected to the usage time of the application.

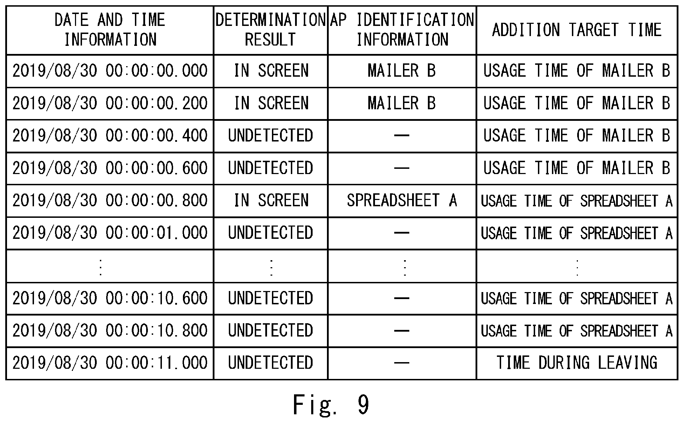

As a result, even when the iris has not been detected due to the blinking of the user during the work, the period during which the iris has not been detected can be added to the usage time of the application as illustrated in Fig. 9. Therefore, it is possible to accurately record the usage time of the application by the user, and it is possible for the administrator to accurately acquire the actual state of business of the worker to be managed.

Further, in the example embodiment described above, when the position of the iris of the user is outside the correspondent screen region in the image, the browsing determining unit 203 determines whether the user has viewed the screen of the application in the past specific period with reference to the generation date and time of the image. When it is determined that the user has viewed the screen of the application in the past specific period, the AP determining unit 202 determines whether the application is a predetermined application. When it is determined that the application is a predetermined application, the time calculating unit 204 adds the period in which the position of the iris of the user is outside the correspondent screen region to the usage time of the application.

As a result, for example, even when the position of the iris of the user has been outside the correspondent screen region because the user looks at a keyboard, mouse, material, or the like at hand while using the application, the period in which the position of the iris has been outside the correspondent screen region can be added to the usage time of the application. Therefore, it is possible to record the actual usage time of the application by the user, and it is possible for the administrator to accurately acquire the actual state of business of the worker to be managed.

Further, in the example embodiment described above, the display image generating unit 205 generates an image displaying for each application at least one of the usage time of an application determined to be a predetermined application and the usage rate of the application per unit time based on the usage time of the application. As a result, the administrator can easily acquire the actual state of business of the worker to be managed.

In the above examples, the program can be stored and provided to a computer by using various types of non-transitory computer-readable media. Non-transitory computer-readable media include various types of tangible storage media. Examples of the non-transitory computer-readable media include magnetic recording media (e.g., flexible disks, magnetic tape, hard disk drives), magneto-optical recording media (e.g., magneto-optical disks), CD-ROMs, CD-Rs, CD-Rs/Ws, semiconductor memories (e.g., mask ROMs, programmable ROMs (PROMs), erasable PROMs (EPROMs), flash ROMs, RAMs). The program may also be provided to the computer by various types of transitory computer-readable media. Examples of the transitory computer-readable media include electrical signals, optical signals, and electromagnetic waves. The transitory computer-readable medium can provide the program to the computer via wired or wireless communication paths, such as electrical wires and optical fibers.

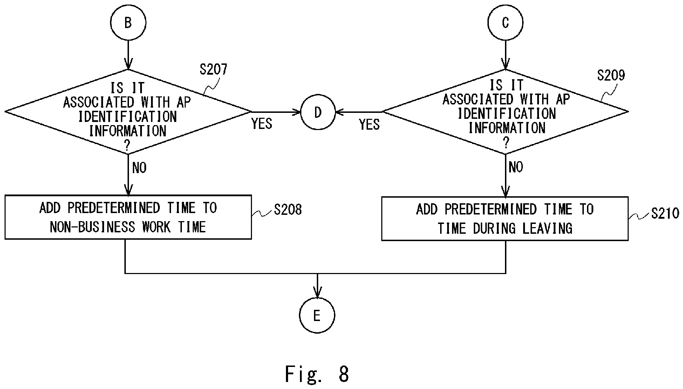

The present invention is not limited to the above-described example embodiment, and can be appropriately modified within a range not departing from the scope of the present invention. For example, in another example embodiment, instead of the user PC 10, a virtual PC such as a virtual personal computer (VPC) may be mounted on an information processing device such as the management server 20. In this case, a single information processing device such as the management server 20 executes a program according to an example embodiment of the present invention including the above-described program modules included in the user PC 10 to execute a method according to an example embodiment of the present invention. In the present example embodiment, the user PC 50 transmits the image, the coordinate information of application screens, and the information indicating the positions of application screens in front-back direction to the information processing device via the VPN 70 and the in-company network 40. Then, a computing device included in the information processing device executes the processing illustrated in Figs. 6 to 8.

In another example embodiment, the user PC 10 may be provided with a face authentication function that identifies a worker to be managed. In this case, only when the user is recognized as an authentic user, the date and time information of the image, the determination result, the viewpoint coordinates, and the identification information of applications as described above are registered in the data recording table. As a result, it is possible to prevent spoofing, and the administrator can acquire the actual state of business of the worker to be managed in detail.

Further, in another example embodiment, the management server 20 may be an external server installed in a place other than a work place of the worker to be managed. Further, the functions of the program modules included in the user PC 10 and the management server 20 may be achieved by a circuit such as a Field-Programmable Gate Array (FPGA) or an Application Specific Integrated Circuit (ASIC).

This application is based upon and claims the benefit of priority from Japanese patent application No. 2019-234345, filed on December 25, 2019.

### Reference Signs List

- 1: Business management system
- 10: User PC
- 100: Computing device
- 102: Analyzing unit
- 104: Position determining unit
- 105: Viewpoint coordinate calculating unit
- 106: AP identifying unit
- 20: Management server
- 200: Computing device
- 202: AP determining unit
- 204: Time calculating unit
- 203: Browsing determining unit
- 205: Display image generating unit

## Claims

1. A business management system (1) comprising:
an analyzing means (102) for analyzing an image to detect an iris of a user;
a position determining means (104) for determining whether a position of the iris of the user in the image is within a correspondent screen region corresponding to a display screen, on which an application screen is displayed, when the iris of the user is detected;
a viewpoint coordinate calculating means (105) for calculating a viewpoint coordinate indicating a viewpoint of the user on the display screen based on the position of the iris of the user when the position of the iris of the user is within the correspondent screen region;
an application identifying means (106) for using coordinate information of the application screen being displayed on the display screen and the viewpoint coordinate to identify an application providing an application screen viewed by the user;
an application determining means (202) for determining whether the identified application is a predetermined application to be used in a business;
a time calculating means (204) for calculating a usage time of an application determined to be the predetermined application when the identified application is determined to be the predetermined application; and
a browsing determining means (203) for determining whether the user views a screen of the identified application in a past specific period with reference to a generation date and time of the image when the iris of the user is not detected, wherein
the application determining means (202) determines whether the identified application is the predetermined application when it is determined that the user views a screen of the identified application in the past specific period, and
the time calculating means (204) adds a period, in which no iris of the user is detected, to a usage time of an application determined to be the predetermined application when it is determined that the identified application is the predetermined application.

2. A business management system (1) comprising:
an analyzing means (102) for analyzing an image to detect an iris of a user;
a position determining means (104) for determining whether a position of the iris of the user in the image is within a correspondent screen region corresponding to a display screen, on which an application screen is displayed, when the iris of the user is detected;
a viewpoint coordinate calculating means (105) for calculating a viewpoint coordinate indicating a viewpoint of the user on the display screen based on the position of the iris of the user when the position of the iris of the user is within the correspondent screen region;
an application identifying means (106) for using coordinate information of the application screen being displayed on the display screen and the viewpoint coordinate to identify an application providing an application screen viewed by the user;
an application determining means (202) for determining whether the identified application is a predetermined application to be used in a business;
a time calculating means (204) for calculating a usage time of an application determined to be the predetermined application when the identified application is determined to be the predetermined application; and
a browsing determining means (203) for determining whether the user views a screen of the identified application in a past specific period with reference to a generation date and time of the image when the position of the iris of the user is outside the correspondent screen region, wherein
the application determining means (202) determines whether the identified application is the predetermined application when it is determined that the user views a screen of the identified application in the past specific period, and
the time calculating means (204) adds a period, in which the position of the iris of the user is outside the correspondent screen region, to a usage time of an application determined to be the predetermined application when it is determined that the identified application is the predetermined application.

3. The business management system (1) according to Claim 1, wherein
the browsing determining means (203) determines whether the user views a screen of the identified application in a past specific period with reference to a generation date and time of the image when the position of the iris of the user is outside the correspondent screen region,
the application determining means (202) determines whether the identified application is the predetermined application when it is determined that the user views a screen of the identified application in the past specific period, and
the time calculating means (204) adds a period, in which the position of the iris of the user is outside the correspondent screen region, to a usage time of an application determined to be the predetermined application when it is determined that the identified application is the predetermined application.

4. The business management system (1) according to Claim 2-1, wherein
the application identifying means (106) associates identification information of the identified application with date and time information of the image when the iris of the user is detected, and does not associate identification information of the identified application with date and time information of the image when no iris of the user is detected, and
the browsing determining means (203) determines whether identification information of the identified application is associated with date and time information of the image corresponding to the past specific period, and thereby determines whether the user views a screen of the identified application in the past specific period.

5. The business management system (1) according to Claim 2 or 3, wherein
the application identifying means (106) associates identification information of the identified application with date and time information of the image when the position of the iris of the user is within the correspondent screen region, and does not associate identification information of the identified application with date and time information of the image when the position of the iris of the user is outside the correspondent screen region, and
the browsing determining means (203) determines whether identification information of the identified application is associated with date and time information of the image corresponding to the past specific period, and thereby determines whether the user views a screen of the identified application in the past specific period.

6. The business management system (1) according to any one of Claims 1 to 5, further comprising a display image generating means (205) for generating an image displaying, for each application, at least one of a usage time of an application determined to be the predetermined application and a usage rate of the application per unit time based on the usage time of the application.

7. A business management method, executed by a computer, comprising:
detecting an iris of a user by analyzing an image;
determining whether a position of the iris of the user in the image is within a correspondent screen region corresponding to a display screen, on which an application screen is displayed, when the iris of the user is detected;
calculating a viewpoint coordinate indicating a viewpoint of the user on the display screen based on the position of the iris of the user when the position of the iris of the user is within the correspondent screen region;
using coordinate information of the application screen being displayed on the display screen and the viewpoint coordinate to identify an application providing an application screen viewed by the user;
determining whether the identified application is a predetermined application to be used in a business;
calculating a usage time of an application determined to be the predetermined application when the identified application is determined to be the predetermined application;
determining whether the user views a screen of the identified application in a past specific period with reference to a generation date and time of the image when no iris of the user is detected;
determining whether the identified application is the predetermined application when it is determined that the user views a screen of the identified application in the past specific period; and
adding a period, in which no iris of the user is detected, to a usage time of an application determined to be the predetermined application when it is determined that the identified application is the predetermined application.

8. A business management method, executed by a computer, comprising:
detecting an iris of a user by analyzing an image;
determining whether a position of the iris of the user in the image is within a correspondent screen region corresponding to a display screen, on which an application screen is displayed, when the iris of the user is detected;
calculating a viewpoint coordinate indicating a viewpoint of the user on the display screen based on the position of the iris of the user when the position of the iris of the user is within the correspondent screen region;
using coordinate information of the application screen being displayed on the display screen and the viewpoint coordinate to identify an application providing an application screen viewed by the user;
determining whether the identified application is a predetermined application to be used in a business;
calculating a usage time of an application determined to be the predetermined application when the identified application is determined to be the predetermined application;
determining whether the user views a screen of the identified application in a past specific period with reference to a generation date and time of the image when the position of the iris of the user is outside the correspondent screen region;
determining whether the identified application is the predetermined application when it is determined that the user views a screen of the identified application in the past specific period; and
adding a period, in which the position of the iris of the user is outside the correspondent screen region, to a usage time of an application determined to be the predetermined application when it is determined that the identified application is the predetermined application.

9. The business management method according to Claim 7, further comprising:
determining whether the user views a screen of the identified application in a past specific period with reference to a generation date and time of the image when the position of the iris of the user is outside the correspondent screen region;
determining whether the identified application is the predetermined application when it is determined that the user views a screen of the identified application in the past specific period; and
adding a period, in which the position of the iris of the user is outside the correspondent screen region, to a usage time of an application determined to be the predetermined application when it is determined that the identified application is the predetermined application.

10. The business management method according to Claim 7, further comprising:
associating identification information of the identified application with date and time information of the image when the iris of the user is detected;
not associating identification information of the identified application with date and time information of the image when no iris of the user is detected; and
determining whether identification information of the identified application is associated with date and time information of the image corresponding to the past specific period, and thereby determining whether the user views a screen of the identified application in the past specific period.

11. The business management method according to Claim 8 or 9, further comprising:
associating identification information of the identified application with date and time information of the image, when the position of the iris of the user is within the correspondent screen region;
not associating identification information of the identified application with date and time information of the image, when the position of the iris of the user is outside the correspondent screen region; and
determining whether identification information of the identified application is associated with date and time information of the image corresponding to the past specific period, and thereby determining whether the user views a screen of the identified application in the past specific period.

12. The business management method according to any one of Claims 7 to 11, further comprising generating, for each application, an image displaying at least one of a usage time of an application determined to be the predetermined application and a usage rate of the application per unit time based on the usage time of the application.

13. A business management program causing a computer to execute the business management method according to any one of Claims 7 to 12.

## Patentansprüche

1. Beschäftigungsmanagementsystem (1), umfassend:
eine Analyseeinrichtung (102) zum Analysieren eines Bildes, um eine Iris eines Benutzers zu erfassen;
eine Positionsbestimmungseinrichtung (104) zum Bestimmen, ob eine Position der Iris des Benutzers in dem Bild innerhalb eines entsprechenden Bildschirmbereichs liegt, der einem Anzeigebildschirm entspricht, auf dem ein Anwendungsbildschirm angezeigt wird, wenn die Iris des Benutzers erfasst wird;
eine Blickpunktkoordinaten-Berechnungseinrichtung (105) zum Berechnen einer Blickpunktkoordinate, die einen Blickpunkt des Benutzers auf dem Anzeigeschirm anzeigt, basierend auf der Position der Iris des Benutzers, wenn die Position der Iris des Benutzers innerhalb des entsprechenden Bildschirmbereichs liegt;
eine Anwendungsidentifizierungseinrichtung (106) zum Verwenden einer Koordinateninformation des Anwendungsbildschirms, der auf dem Anzeigeschirm angezeigt wird, und der Blickpunktkoordinate, um eine Anwendung zu identifizieren, die einen vom Benutzer betrachteten Anwendungsbildschirm bereitstellt;
eine Anwendungsbestimmungseinrichtung (202) zum Bestimmen, ob die identifizierte Anwendung eine vorbestimmte Anwendung ist, die bei einer Beschäftigung zu verwenden ist;
eine Zeitberechnungseinrichtung (204) zum Berechnen einer Nutzungszeit einer Anwendung, die als die vorbestimmte Anwendung bestimmt ist, wenn die identifizierte Anwendung als die vorbestimmte Anwendung bestimmt ist; und
eine Browsing-Bestimmungseinrichtung (203) zum Bestimmen, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn die Iris des Benutzers nicht erfasst wird, wobei
die Anwendungsbestimmungseinrichtung (202) bestimmt, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet, und
die Zeitberechnungseinrichtung (204) einen Zeitraum, in dem keine Iris des Benutzers erfasst wird, zu einer Nutzungszeit einer Anwendung addiert, die als die vorbestimmte Anwendung bestimmt wird, wenn bestimmt wird, dass die identifizierte Anwendung die vorbestimmte Anwendung ist.

2. Beschäftigungsmanagementsystem (1), umfassend:
eine Analyseeinrichtung (102) zum Analysieren eines Bildes, um eine Iris eines Benutzers zu erfassen;
eine Positionsbestimmungseinrichtung (104) zum Bestimmen, ob eine Position der Iris des Benutzers in dem Bild innerhalb eines entsprechenden Bildschirmbereichs liegt, der einem Anzeigebildschirm entspricht, auf dem ein Anwendungsbildschirm angezeigt wird, wenn die Iris des Benutzers erfasst wird;
eine Blickpunktkoordinaten-Berechnungseinrichtung (105) zum Berechnen einer Blickpunktkoordinate, die einen Blickpunkt des Benutzers auf dem Anzeigeschirm anzeigt, basierend auf der Position der Iris des Benutzers, wenn die Position der Iris des Benutzers innerhalb des entsprechenden Bildschirmbereichs liegt;
eine Anwendungsidentifizierungseinrichtung (106) zum Verwenden einer Koordinateninformation des Anwendungsbildschirms, der auf dem Anzeigeschirm angezeigt wird, und der Blickpunktkoordinate, um eine Anwendung zu identifizieren, die einen vom Benutzer betrachteten Anwendungsbildschirm bereitstellt;
eine Anwendungsbestimmungseinrichtung (202) zum Bestimmen, ob die identifizierte Anwendung eine vorbestimmte Anwendung ist, die bei einer Beschäftigung zu verwenden ist;
eine Zeitberechnungseinrichtung (204) zum Berechnen einer Nutzungszeit einer Anwendung, die als die vorbestimmte Anwendung bestimmt ist, wenn die identifizierte Anwendung als die vorbestimmte Anwendung bestimmt ist; und
eine Browsing-Bestimmungseinrichtung (203) zum Bestimmen, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn die Position der Iris des Benutzers außerhalb des entsprechenden Bildschirmbereichs liegt, wobei
die Anwendungsbestimmungseinrichtung (202) bestimmt, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet, und
die Zeitberechnungseinrichtung (204) einen Zeitraum, in dem die Position der Iris des Benutzers außerhalb des entsprechenden Bildschirmbereichs liegt, zu einer Nutzungszeit einer Anwendung addiert, die als die vorbestimmte Anwendung bestimmt ist, wenn bestimmt wird, dass die identifizierte Anwendung die vorbestimmte Anwendung ist.

3. Beschäftigungsmanagementsystem (1) nach Anspruch 1, wobei
die Browsing-Bestimmungseinrichtung (203) bestimmt, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn die Position der Iris des Benutzers außerhalb des entsprechenden Bildschirmbereichs liegt,
die Anwendungsbestimmungseinrichtung (202) bestimmt, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet, und
die Zeitberechnungseinrichtung (204) einen Zeitraum, in dem die Position der Iris des Benutzers außerhalb des entsprechenden Bildschirmbereichs liegt, zu einer Nutzungszeit einer Anwendung addiert, die als die vorbestimmte Anwendung bestimmt ist, wenn bestimmt wird, dass die identifizierte Anwendung die vorbestimmte Anwendung ist.

4. Beschäftigungsmanagementsystem (1) nach Anspruch 1, wobei
die Anwendungsidentifizierungseinrichtung (106) eine Identifikationsinformation der identifizierten Anwendung mit einer Datums- und Zeitinformation des Bildes verknüpft, wenn die Iris des Benutzers erfasst wird, und eine Identifikationsinformation der identifizierten Anwendung nicht mit einer Datums- und Zeitinformation des Bildes verknüpft, wenn keine Iris des Benutzers erfasst wird, und
die Browsing-Bestimmungseinrichtung (203) bestimmt, ob die Identifikationsinformation der identifizierten Anwendung mit der Datums- und Zeitinformation des Bildes entsprechend dem vergangenen spezifischen Zeitraum verknüpft ist, und dadurch bestimmt, ob der Benutzer einen Bildschirm der identifizierten Anwendung in dem vergangenen spezifischen Zeitraum betrachtet.

5. Beschäftigungsmanagementsystem (1) nach Anspruch 2 oder 3, wobei
die Anwendungsidentifizierungseinrichtung (106) eine Identifikationsinformation der identifizierten Anwendung mit einer Datums- und Zeitinformation des Bildes verknüpft, wenn die Position der Iris des Benutzers innerhalb des entsprechenden Bildschirmbereichs liegt, und eine Identifikationsinformation der identifizierten Anwendung nicht mit einer Datums- und Zeitinformation des Bildes verknüpft, wenn die Position der Iris des Benutzers außerhalb des entsprechenden Bildschirmbereichs liegt, und
die Browsing-Bestimmungseinrichtung (203) bestimmt, ob die Identifikationsinformation der identifizierten Anwendung mit der Datums- und Zeitinformation des Bildes entsprechend dem vergangenen spezifischen Zeitraum verknüpft ist, und dadurch bestimmt, ob der Benutzer einen Bildschirm der identifizierten Anwendung in dem vergangenen spezifischen Zeitraum betrachtet.

6. Beschäftigungsmanagementsystem (1) nach einem der Ansprüche 1 bis 5, ferner umfassend eine Anzeigebilderzeugungseinrichtung (205) zum Erzeugen eines Bildes, das für jede Anwendung zumindest eine Nutzungszeit einer Anwendung, die als die vorbestimmte Anwendung bestimmt ist, und eine Nutzungsrate der Anwendung pro Zeiteinheit auf der Grundlage der Nutzungszeit der Anwendung anzeigt.

7. Beschäftigungsmanagementverfahren, das von einem Computer ausgeführt wird, umfassend:
Erfassen einer Iris eines Benutzers durch Analysieren eines Bildes;
Bestimmen, ob eine Position der Iris des Benutzers in dem Bild innerhalb eines entsprechenden Bildschirmbereichs liegt, der einem Anzeigebildschirm entspricht, auf dem ein Anwendungsbildschirm angezeigt wird, wenn die Iris des Benutzers erfasst wird;
Berechnen einer Blickpunktkoordinate, die einen Blickpunkt des Benutzers auf dem Anzeigebildschirm anzeigt, basierend auf der Position der Iris des Benutzers, wenn die Position der Iris des Benutzers innerhalb des entsprechenden Bildschirmbereichs liegt;
Verwenden einer Koordinateninformation des Anwendungsbildschirms, der auf dem Anzeigebildschirm angezeigt wird, und der Blickpunktkoordinate, um eine Anwendung zu identifizieren, die einen von dem Benutzer betrachteten Anwendungsbildschirm bereitstellt;
Bestimmen, ob die identifizierte Anwendung eine vorbestimmte Anwendung ist, die bei einer Beschäftigung zu verwenden ist;
Berechnen einer Nutzungszeit einer Anwendung, die als die vorbestimmte Anwendung bestimmt ist, wenn die identifizierte Anwendung als die vorbestimmte Anwendung bestimmt ist;
Bestimmen, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn keine Iris des Benutzers erfasst wird;
Bestimmen, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet; und
Addieren eines Zeitraums, in dem keine Iris des Benutzers erfasst wird, zu einer Nutzungszeit einer Anwendung, die als die vorbestimmte Anwendung bestimmt ist, wenn bestimmt wird, dass die identifizierte Anwendung die vorbestimmte Anwendung ist.

8. Beschäftigungsmanagementverfahren, das von einem Computer ausgeführt wird, umfassend:
Erfassen einer Iris eines Benutzers durch Analysieren eines Bildes;
Bestimmen, ob eine Position der Iris des Benutzers in dem Bild innerhalb eines entsprechenden Bildschirmbereichs liegt, der einem Anzeigebildschirm entspricht, auf dem ein Anwendungsbildschirm angezeigt wird, wenn die Iris des Benutzers erfasst wird;
Berechnen einer Blickpunktkoordinate, die einen Blickpunkt des Benutzers auf dem Anzeigebildschirm anzeigt, basierend auf der Position der Iris des Benutzers, wenn die Position der Iris des Benutzers innerhalb des entsprechenden Bildschirmbereichs liegt;
Verwenden einer Koordinateninformation des Anwendungsbildschirms, der auf dem Anzeigebildschirm angezeigt wird, und der Blickpunktkoordinate, um eine Anwendung zu identifizieren, die einen vom Benutzer betrachteten Anwendungsbildschirm bereitstellt;
Bestimmen, ob die identifizierte Anwendung eine vorbestimmte Anwendung ist, die bei einer Beschäftigung zu verwendet ist;
Berechnen einer Nutzungszeit einer Anwendung, die als die vorbestimmte Anwendung bestimmt ist, wenn die identifizierte Anwendung als die vorbestimmte Anwendung bestimmt wird;
Bestimmen, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn die Position der Iris des Benutzers außerhalb des entsprechenden Bildschirmbereichs liegt;
Bestimmen, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet; und
Addieren eines Zeitraums, in dem die Position der Iris des Benutzers außerhalb des entsprechenden Bildschirmbereichs liegt, zu einer Nutzungszeit einer Anwendung, die als die vorbestimmte Anwendung bestimmt ist, wenn bestimmt wird, dass die identifizierte Anwendung die vorbestimmte Anwendung ist.

9. Beschäftigungsmanagementverfahren nach Anspruch 7, ferner umfassend:
Bestimmen, ob der Benutzer einen Bildschirm der identifizierten Anwendung in einem vergangenen spezifischen Zeitraum betrachtet, unter Bezugnahme auf ein Bilderzeugungsdatum und eine Bilderzeugungszeit, wenn die Position der Iris des Benutzers außerhalb des entsprechenden Bildschirmbereichs liegt;
Bestimmen, ob die identifizierte Anwendung die vorbestimmte Anwendung ist, wenn bestimmt wird, dass der Benutzer einen Bildschirm der identifizierten Anwendung in dem vergangenen spezifischen Zeitraum betrachtet; und
Addieren eines Zeitraums, in dem die Position der Iris des Benutzers außerhalb des entsprechenden Bildschirmbereichs liegt, zu einer Nutzungszeit einer Anwendung, die als die vorbestimmte Anwendung bestimmt ist, wenn bestimmt wird, dass die identifizierte Anwendung die vorbestimmte Anwendung ist.

10. Beschäftigungsmanagementverfahren nach Anspruch 7, ferner umfassend:
Verknüpfen einer Identifikationsinformation der identifizierten Anwendung mit einer Datums- und Zeitinformation des Bildes, wenn die Iris des Benutzers erfasst wird;
Nicht-Verknüpfen einer Identifikationsinformation der identifizierten Anwendung mit einer Datums- und Zeitinformation des Bildes, wenn keine Iris des Benutzers erfasst wird; und
Bestimmen, ob die Identifikationsinformation der identifizierten Anwendung mit der Datums- und Zeitinformation des Bildes entsprechend dem vergangenen spezifischen Zeitraum verknüpft ist, und dadurch Bestimmen, ob der Benutzer einen Bildschirm der identifizierten Anwendung in dem vergangenen spezifischen Zeitraum betrachtet.

11. Beschäftigungsmanagementverfahren nach Anspruch 8 oder 9, ferner umfassend:
Verknüpfen einer Identifikationsinformation der identifizierten Anwendung mit einer Datums- und Zeitinformation des Bildes, wenn die Position der Iris des Benutzers innerhalb des entsprechenden Bildschirmbereichs liegt;
Nicht-Verknüpfen einer Identifikationsinformation der identifizierten Anwendung mit einer Datums- und Zeitinformation des Bildes, wenn die Position der Iris des Benutzers außerhalb des entsprechenden Bildschirmbereichs liegt; und
Bestimmen, ob die Identifikationsinformation der identifizierten Anwendung mit der Datums- und Zeitinformation des Bildes entsprechend dem vergangenen spezifischen Zeitraum verknüpft ist, und dadurch Bestimmen, ob der Benutzer einen Bildschirm der identifizierten Anwendung in dem vergangenen spezifischen Zeitraum betrachtet.

12. Beschäftigungsmanagementverfahren nach einem der Ansprüche 7 bis 11, ferner umfassend das Erzeugen, für jede Anwendung, eines Bildes, das zumindest eines aus Nutzungszeit einer Anwendung, die als die vorbestimmte Anwendung bestimmt ist, und Nutzungsrate der Anwendung pro Zeiteinheit auf der Grundlage der Nutzungszeit der Anwendung anzeigt.

13. Beschäftigungsmanagementprogramm, das einen Computer veranlasst, das Beschäftigungsmanagementverfahren nach einem der Ansprüche 7 bis 12 durchzuführen.

## Revendications

1. Système de gestion d'entreprise (1) comprenant :
un moyen d'analyse (102) pour analyser une image pour détecter un iris d'un utilisateur ;
un moyen de détermination de position (104) pour déterminer si une position de l'iris de l'utilisateur sur l'image se trouve dans une région d'écran correspondante correspondant à un écran d'affichage, sur lequel un écran d'application est affiché, lorsque l'iris de l'utilisateur est détecté ;
un moyen de calcul de coordonnées de point de vue (105) pour calculer des coordonnées de point de vue indiquant un point de vue de l'utilisateur sur l'écran d'affichage sur la base de la position de l'iris de l'utilisateur lorsque la position de l'iris de l'utilisateur se trouve dans la région d'écran correspondante ;
un moyen d'identification d'application (106) pour utiliser des informations de coordonnées de l'écran d'application affiché sur l'écran d'affichage et les coordonnées de point de vue pour identifier une application fournissant un écran d'application visualisé par l'utilisateur ;
un moyen de détermination d'application (202) pour déterminer si l'application identifiée est une application prédéterminée à utiliser dans une entreprise ou non ;
un moyen de calcul de temps (204) pour calculer un temps d'utilisation d'une application déterminée comme étant l'application prédéterminée lorsque l'application identifiée est déterminée comme étant l'application prédéterminée ; et
un moyen de détermination de navigation (203) pour déterminer si l'utilisateur visualise un écran de l'application identifiée dans une période spécifique passée en référence à une date et une heure de génération de l'image lorsque l'iris de l'utilisateur n'est pas détecté, dans lequel
le moyen de détermination d'application (202) détermine si l'application identifiée est l'application prédéterminée lorsqu'il est déterminé que l'utilisateur visualise un écran de l'application identifiée dans la période spécifique passée, et
le moyen de calcul de temps (204) ajoute une période, dans laquelle aucun iris de l'utilisateur n'est détecté, à un temps d'utilisation d'une application déterminée comme étant l'application prédéterminée lorsqu'il est déterminé que l'application identifiée est l'application prédéterminée.

2. Système de gestion d'entreprise (1) comprenant :
un moyen d'analyse (102) pour analyser une image pour détecter un iris d'un utilisateur ;
un moyen de détermination de position (104) pour déterminer si une position de l'iris de l'utilisateur sur l'image se trouve dans une région d'écran correspondante correspondant à un écran d'affichage, sur lequel un écran d'application est affiché, lorsque l'iris de l'utilisateur est détecté ;
un moyen de calcul de coordonnées de point de vue (105) pour calculer des coordonnées de point de vue indiquant un point de vue de l'utilisateur sur l'écran d'affichage sur la base de la position de l'iris de l'utilisateur lorsque la position de l'iris de l'utilisateur se trouve dans la région d'écran correspondante ;
un moyen d'identification d'application (106) pour utiliser des informations de coordonnées de l'écran d'application affiché sur l'écran d'affichage et les coordonnées de point de vue pour identifier une application fournissant un écran d'application visualisé par l'utilisateur ;
un moyen de détermination d'application (202) pour déterminer si l'application identifiée est une application prédéterminée à utiliser dans une entreprise ;
un moyen de calcul de temps (204) pour calculer un temps d'utilisation d'une application déterminée comme étant l'application prédéterminée lorsque l'application identifiée est déterminée comme étant l'application prédéterminée ; et
un moyen de détermination de navigation (203) pour déterminer si l'utilisateur visualise un écran de l'application identifiée dans une période spécifique passée en référence à une date et une heure de génération de l'image lorsque la position de l'iris de l'utilisateur se trouve à l'extérieur de la région d'écran correspondante, dans lequel
le moyen de détermination d'application (202) détermine si l'application identifiée est l'application prédéterminée lorsqu'il est déterminé que l'utilisateur visualise un écran de l'application identifiée dans la période spécifique passée, et
le moyen de calcul de temps (204) ajoute une période, dans laquelle la position de l'iris de l'utilisateur se trouve à l'extérieur de la région d'écran correspondante, à un temps d'utilisation d'une application déterminée comme étant l'application prédéterminée lorsqu'il est déterminé que l'application identifiée est l'application prédéterminée.

3. Système de gestion d'entreprise (1) selon la revendication 1,
dans lequel
le moyen de détermination de navigation (203) détermine si l'utilisateur visualise un écran de l'application identifiée dans une période spécifique passée en référence à une date et une heure de génération de l'image lorsque la position de l'iris de l'utilisateur se trouve à l'extérieur de la région d'écran correspondante,
le moyen de détermination d'application (202) détermine si l'application identifiée est l'application prédéterminée lorsqu'il est déterminé que l'utilisateur visualise un écran de l'application identifiée dans la période spécifique passée, et
le moyen de calcul de temps (204) ajoute une période, dans laquelle la position de l'iris de l'utilisateur se trouve à l'extérieur de la région d'écran correspondante, à un temps d'utilisation d'une application déterminée comme étant l'application prédéterminée lorsqu'il est déterminé que l'application identifiée est l'application prédéterminée.

4. Système de gestion d'entreprise (1) selon la revendication 1,
dans lequel
le moyen d'identification d'application (106) associe des informations d'identification de l'application identifiée à des informations de date et d'heure de l'image lorsque l'iris de l'utilisateur est détecté, et n'associe pas des informations d'identification de l'application identifiée à des informations de date et d'heure de l'image lorsqu'aucun iris de l'utilisateur n'est détecté, et
le moyen de détermination de navigation (203) détermine si les informations d'identification de l'application identifiée sont associées aux informations de date et d'heure de l'image correspondant à la période spécifique passée, et détermine ainsi si l'utilisateur visualise un écran de l'application identifiée dans la période spécifique passée.

5. Système de gestion d'entreprise (1) selon la revendication 2 ou 3,
dans lequel
le moyen d'identification d'application (106) associe des informations d'identification de l'application identifiée à des informations de date et d'heure de l'image lorsque la position de l'iris de l'utilisateur se trouve dans la région d'écran correspondante, et n'associe pas des informations d'identification de l'application identifiée à des informations de date et d'heure de l'image lorsque la position de l'iris de l'utilisateur se trouve à l'extérieur de la région d'écran correspondante, et
le moyen de détermination de navigation (203) détermine si des informations d'identification de l'application identifiée sont associées à des informations de date et d'heure de l'image correspondant à la période spécifique passée, et détermine ainsi si l'utilisateur visualise un écran de l'application identifiée dans la période spécifique passée.

6. Système de gestion d'entreprise (1) selon l'une quelconque des revendications 1 à 5, comprenant en outre un moyen de génération d'image d'affichage (205) pour générer une image affichant, pour chaque application, au moins l'un d'un temps d'utilisation d'une application déterminée comme étant l'application prédéterminée et d'un taux d'utilisation de l'application par unité de temps sur la base du temps d'utilisation de l'application.

7. Procédé de gestion d'entreprise, exécuté par un ordinateur, comprenant :
la détection d'un iris d'un utilisateur en analysant une image ;
la détermination si une position de l'iris de l'utilisateur sur l'image se trouve dans une région d'écran correspondante correspondant à un écran d'affichage, sur lequel un écran d'application est affiché, lorsque l'iris de l'utilisateur est détecté ;
le calcul de coordonnées de point de vue indiquant un point de vue de l'utilisateur sur l'écran d'affichage sur la base de la position de l'iris de l'utilisateur lorsque la position de l'iris de l'utilisateur se trouve dans la région d'écran correspondante ;
l'utilisation d'informations de coordonnées de l'écran d'application affiché sur l'écran d'affichage et des coordonnées de point de vue pour identifier une application fournissant un écran d'application visualisé par l'utilisateur ;
la détermination pour savoir si l'application identifiée est une application prédéterminée à utiliser dans une entreprise ; et
le calcul d'un temps d'utilisation d'une application déterminée comme étant l'application prédéterminée lorsque l'application identifiée est déterminée comme étant l'application prédéterminée ;
la détermination pour savoir si l'utilisateur visualise un écran de l'application identifiée dans une période spécifique passée en référence à une date et une heure de génération de l'image lorsqu'aucun iris de l'utilisateur n'est détecté ;
la détermination pour savoir si l'application identifiée est l'application prédéterminée lorsqu'il est déterminé que l'utilisateur visualise un écran de l'application identifiée dans la période spécifique passée ; et
l'ajout d'une période, dans laquelle aucun iris de l'utilisateur n'est détecté, à un temps d'utilisation d'une application déterminée comme étant l'application prédéterminée lorsqu'il est déterminé que l'application identifiée est l'application prédéterm inée.

8. Procédé de gestion d'entreprise, exécuté par un ordinateur, comprenant :
la détection d'un iris d'un utilisateur en analysant une image ;
la détermination si une position de l'iris de l'utilisateur sur l'image se trouve dans une région d'écran correspondante correspondant à un écran d'affichage, sur lequel un écran d'application est affiché, lorsque l'iris de l'utilisateur est détecté ;
le calcul de coordonnées de point de vue indiquant un point de vue de l'utilisateur sur l'écran d'affichage sur la base de la position de l'iris de l'utilisateur lorsque la position de l'iris de l'utilisateur se trouve dans la région d'écran correspondante ;
l'utilisation d'informations de coordonnées de l'écran d'application affiché sur l'écran d'affichage et des coordonnées de point de vue pour identifier une application fournissant un écran d'application visualisé par l'utilisateur ;
la détermination pour savoir si l'application identifiée est une application prédéterminée à utiliser dans une entreprise ; et
le calcul d'un temps d'utilisation d'une application déterminée comme étant l'application prédéterminée lorsque l'application identifiée est déterminée comme étant l'application prédéterminée ;
la détermination pour savoir si l'utilisateur visualise un écran de l'application identifiée dans une période spécifique passée en référence à une date et une heure de génération de l'image lorsque la position de l'iris de l'utilisateur se trouve à l'extérieur de la région d'écran correspondante ;
la détermination pour savoir si l'application identifiée est l'application prédéterminée lorsqu'il est déterminé que l'utilisateur visualise un écran de l'application identifiée dans la période spécifique passée ; et
l'ajout d'une période, dans laquelle la position de l'iris de l'utilisateur se trouve à l'extérieur de la région d'écran correspondante, à un temps d'utilisation d'une application déterminée comme étant l'application prédéterminée lorsqu'il est déterminé que l'application identifiée est l'application prédéterminée.

9. Procédé de gestion d'entreprise selon la revendication 7, comprenant en outre :
la détermination pour savoir si l'utilisateur visualise un écran de l'application identifiée dans une période spécifique passée en référence à une date et une heure de génération de l'image lorsque la position de l'iris de l'utilisateur se trouve à l'extérieur de la région d'écran correspondante ;
la détermination pour savoir si l'application identifiée est l'application prédéterminée lorsqu'il est déterminé que l'utilisateur visualise un écran de l'application identifiée dans la période spécifique passée ; et
l'ajout d'une période, dans laquelle la position de l'iris de l'utilisateur se trouve à l'extérieur de la région d'écran correspondante, à un temps d'utilisation d'une application déterminée comme étant l'application prédéterminée lorsqu'il est déterminé que l'application identifiée est l'application prédéterminée.

10. Procédé de gestion d'entreprise selon la revendication 7, comprenant en outre :
l'association d'informations d'identification de l'application identifiée à des informations de date et d'heure de l'image lorsque l'iris de l'utilisateur est détecté ;
la non-association d'informations d'identification de l'application identifiée à des informations de date et d'heure de l'image lorsqu'aucun iris de l'utilisateur n'est détecté ; et
la détermination pour savoir si des informations d'identification de l'application identifiée sont associées à des informations de date et d'heure de l'image correspondant à la période spécifique passée, et ainsi la détermination pour savoir si l'utilisateur visualise un écran de l'application identifiée dans la période spécifique passée.

11. Procédé de gestion d'entreprise selon la revendication 8 ou 9, comprenant en outre :
l'association d'informations d'identification de l'application identifiée à des informations de date et d'heure de l'image lorsque la position de l'iris de l'utilisateur se trouve dans une région d'écran correspondante ;
la non-association d'informations d'identification de l'application identifiée à des informations de date et d'heure de l'image lorsque la position de l'iris de l'utilisateur se trouve à l'extérieur de la région d'écran correspondante ; et
la détermination pour savoir si des informations d'identification de l'application identifiée sont associées à des informations de date et d'heure de l'image correspondant à la période spécifique passée, et ainsi la détermination pour savoir si l'utilisateur visualise un écran de l'application identifiée dans la période spécifique passée.

12. Procédé de gestion d'entreprise selon l'une quelconque des revendications 7 à 11, comprenant en outre la génération, pour chaque application, d'une image affichant au moins un d'un temps d'utilisation d'une application déterminée comme étant l'application prédéterminée et d'un taux d'utilisation de l'application par unité de temps sur la base du temps d'utilisation de l'application.

13. Programme de gestion d'entreprise amenant un ordinateur à exécuter le procédé de gestion d'entreprise selon l'une quelconque des revendications 7 à 12.
